# EUROPÄISCHE PATENTSCHRIFT

(11) **EP 2 749 440 B1**
(45) Veröffentlichungstag und Bekanntmachung des Hinweises auf die Patenterteilung: **31.05.2017**
(21) Anmeldenummer: 13198949.3
(22) Anmeldetag: 20.12.2013
(51) Int. Cl.: B60H 3/00, A61L 9/12, F24F 3/12, F24F 3/16

(54) **Beduftungsvorrichtung**
Scenting device
Atomiseur

(30) Priorität: 28.12.2012 DE 102012224497
(43) Veröffentlichungstag der Anmeldung: 02.07.2014
(73) Patentinhaber: MAHLE Behr GmbH & Co. KG, 70469 Stuttgart (DE)
(72) Erfinder: Baumann, Tobias, 74321 Bietigheim-Bissingen (DE); Lochmahr, Karl, 71665 Vaihingen/Enz (DE); Pitz, Eric, 70199 Stuttgart (DE); Rais, Thomas, 71672 Marbach/Neckar (DE)
(74) Vertreter: Grauel, Andreas

(56) Entgegenhaltungen:
- GB-A- 2 401 047
- JP-A- S6 349 518
- JP-A- H02 225 125

## Beschreibung

### Technisches Gebiet

Die Erfindung betrifft eine Beduftungsvorrichtung mit einer ersten Klappe, einer zweiten Klappe, einem Aktuator, einer ersten Duftmittelkartusche und einer zweiten Duftmittelkartusche, wobei die erste Duftmittelkartusche eine erste Öffnung aufweist, die durch die erste Klappe in zumindest einer Stellung der ersten Klappe verschließbar ist, wobei die zweite Duftmittelkartusche eine zweite Öffnung aufweist, die durch die zweite Klappe in zumindest einer Stellung der zweiten Klappe verschließbar ist.

### Stand der Technik

Zur aktiven Beduftung von Luft, welche über Klimaanlagen aufbereitet und in die Innenräume von Kraftfahrzeugen eingeleitet wird, werden zunehmend Beduftungsvorrichtungen eingesetzt.

Hierbei handelt es sich oft um Duftmittelkartuschen, die einen in ihnen gespeicherten Duftstoff abgeben können. Diese Duftmittelkartuschen können dabei vorteilhafterweise derart angeordnet sein, dass sie das Duftmittel in einen Luftstrom einer Klimaanlage abgeben, welcher in den Innenraum eines Fahrzeugs geleitet wird.

Die Ansteuerung der Duftmittelkartuschen kann dabei über Klappen erfolgen, die Austrittsöffnungen in den Duftmittelkartuschen freigeben oder verschließen. Zur Ansteuerung der Klappen können beispielsweise Schrittmotoren eingesetzt werden, welche die Klappen über ein geeignetes Getriebe und eine Verstellmechanik bewegen.

Nachteilig an den Lösungen gemäß dem Stand der Technik ist insbesondere, dass Schrittmotoren mit ihren Getrieben und evtl. einer Verstellmechanik einen verhältnismäßig großen Bauraumbedarf aufweisen. Außerdem kann von einem Schrittmotor mit integriertem Getriebe eine störende Geräuschentwicklung ausgehen, die das Komfortempfinden der Insassen negativ beeinflusst.Das Dokument JP H02 225125A offenbart eine Beduftungsvorrichtung gemäß Oberbegriff des Anspruchs 1.

### Darstellung der Erfindung, Aufgabe, Lösung, Vorteile

Daher ist es die Aufgabe der vorliegenden Erfindung eine Beduftungsvorrichtung bereitzustellen, die gegenüber dem Stand der Technik optimiert ist. Weiterhin soll die Erfindung eine Anordnung einer Beduftungsvorrichtung in einer Klimaanlage bereitstellen.

Die Aufgabe der vorliegenden Erfindung wird hinsichtlich der Beduftungsvorrichtung durch eine Beduftungsvorrichtung mit den Merkmalen des Anspruchs 1 gelöst.

Ein Ausführungsbeispiel der Erfindung betrifft eine Beduftungsvorrichtung mit einer ersten Klappe, einer zweiten Klappe, einem Aktuator, einer ersten Duftmittelkartusche und einer zweiten Duftmittelkartusche, wobei die erste Duftmittelkartusche eine erste Öffnung aufweist, die durch die erste Klappe in zumindest einer Stellung der ersten Klappe verschließbar ist, wobei die zweite Duftmittelkartusche eine zweite Öffnung aufweist, die durch die zweite Klappe in zumindest einer Stellung der zweiten Klappe verschließbar ist, wobei die erste Klappe und die zweite Klappe durch den Aktuator betätigbar sind, wobei der Aktuator ein Stellglied aufweist, welches durch den Aktuator translatorisch verschiebbar ist.

Vorteilhaft an einer solchen Ausgestaltung einer Beduftungsvorrichtung ist insbesondere, dass nur eine geringe Anzahl an Elementen benötigt wird. Die Komplexität des Aufbaus einer erfindungsgemäßen Beduftungsvorrichtung ist insbesondere im Vergleich zu Beduftungsvorrichtungen, welche Schrittmotoren und aufwändige Getriebe aufweisen besonders gering.

Ein bevorzugtes Ausführungsbeispiel ist dadurch gekennzeichnet, dass der Aktuator durch ein Piezoaktuator oder durch einen elektrischen Hubmagneten gebildet ist.

Der Piezoaktuator ist besonders vorteilhaft, da er bereits bei kurzen Arbeitswegen relativ hohe Stellkräfte erzeugen kann, wodurch auch größere Klappen bewegt werden können. Weiterhin ist über Piezoaktuatoren eine translatorische Bewegung besonders leicht darstellbar.

Ein elektrischer Hubmagnet kann ebenfalls auf einfache Weise eine translatorische Bewegung darstellen. Beiden Ausführungsformen ist gemein, dass sie sehr geräuscharm betreibbar sind.

Auch ist es zu bevorzugen, wenn die erste Klappe und/oder die zweite Klappe um eine Drehachse drehbar gelagert sind.

Drehbar gelagerte Klappen sind in vielfältigen Formen bekannt. Die Herstellung der Klappen ist besonders einfach und kostengünstig. Die Verdrehung einer Klappe um eine Drehachse ist mit einfachen Mitteln zu erreichen.

In einer besonders günstigen Ausgestaltung der Erfindung ist es außerdem vorgesehen, dass die erste Klappe und die zweite Klappe über ein Getriebe entweder einzeln oder gemeinsam von dem Aktuator betätigbar sind.

Ein Getriebe kann im einfachsten Fall ein starrer Hebel sein, welcher so mit einer der Klappen verbunden ist, dass die Klappe über eine Bewegung des Hebels verdrehbar ist. Ein einfacher Hebel ist dabei vorteilhaft, da der Aufbau der Beduftungsvorrichtung bei Verwendung eines Hebels besonders einfach bleibt.

In weiteren Ausführungsformen können auch Übersetzungen vorgesehen sein, die die auf die Klappe wirkende Stellkraft des Aktuators beeinflussen.

Ebenfalls kann über eine vorteilhafte Gestaltung des Getriebes erreicht werden, dass das Bewegen des Stellgliedes in eine Richtung zu einer Verstellung von einer oder beiden Klappen führt. Dies ist besonders vorteilhaft, da es so möglich ist, mit nur einem Aktuator eine Mehrzahl von Klappen gleichzeitig zu bedienen.Erfindungsgemäß ist der Aktuator derart relativ zu der ersten Klappe und der zweiten Klappe positioniert dass durch ein Verschieben des Stellgliedes in eine erste Richtung die erste Klappe betätigt wird und durch ein Verschieben des Stellgliedes in eine zweite Richtung die zweite Klappe betätigt wird.

Durch eine solche Positionierung können mit nur einem Aktuator beide Klappen betätigt werden. Erfindungsgemäß ermöglicht der Aktuator eine Verschiebung des Stellgliedes in zwei Richtungen. Vorteilhafterweise liegen die erste Richtung und die zweite Richtung dabei auf einer Geraden, wobei sie sich durch das Vorzeichen voneinander unterscheiden. Eine solche translatorische Bewegung auf einer Geraden in zwei Richtungen ist insbesondere von Piezoaktuatoren oder elektrischen Hubmagneten besonders leicht zu erzeugen.

Weiterhin ist es zu bevorzugen, wenn die erste Klappe und/oder die zweite Klappe durch jeweils ein Kraftspeicherelement oder durch ein gemeinsames Kraftspeicherelement in einer ersten Stellung gehalten werden, in welcher sie die jeweilige Öffnung der Duftmittelkartusche verschließen.

Durch ein Kraftspeicherelement, wie beispielsweise eine Feder kann besonders einfach erreicht werden, dass die Duftmittelkartusche von einer Klappe zuverlässig verschlossen ist, solange der Aktuator nicht betätigt wird. Da innerhalb der Duftmittelkartusche ein Duftmittel vorhanden ist, welches sich bei geöffneter Duftmittelkartusche verflüchtigt, ist es besonders vorteilhaft, wenn die Klappe im inaktiven Zustand der Beduftungsvorrichtung die Duftmittelkartusche verschließt.

Das Kraftspeicherelement ist dabei vorteilhafterweise so ausgelegt, dass die Schließkraft ausreicht um die Duftmittelkartusche zuverlässig zu verschließen, jedoch gleichzeitig so, dass die maximal vom Aktuator generierbare Stellkraft ausreicht um die Klappe bei Bedarf zu bewegen.

Insbesondere Federn sind hierbei zu bevorzugen, da sie in einer großen Vielzahl am Markt verfügbar sind, kostengünstig herzustellen sind und eine verhältnismäßig hohe Sicherheit gegen einen Ausfall bieten.

Gemäß einer besonders bevorzugten Weiterbildung der Erfindung kann es vorgesehen sein, dass die erste Klappe und/oder die zweite Klappe durch den Aktuator in eine von der ersten Stellung verschiedene Stellung bewegbar ist, in welcher die jeweilige Öffnung der jeweiligen Duftmittelkartusche freigegeben wird.

Besonders vorteilhaft ist, dass die Klappen nur durch den Aktuator so bewegt werden können, dass die Duftmittelkartuschen freigegeben werden. Dies verhindert wirksam ein ungewolltes Freisetzen des Duftmittels.

Ein weiteres bevorzugtes Ausführungsbeispiel ist dadurch gekennzeichnet, dass die erste Duftmittelkartusche, die zweite Duftmittelkartusche, die erste Klappe, die zweite Klappe, der Aktuator und ein eventuell vorhandenes Getriebe in einer einteiligen Baueinheit zusammengefasst sind.

Die Ausführung der einzelnen Elemente der Beduftungsvorrichtung in einer einteiligen Baueinheit ist besonders vorteilhaft, da die Beduftungsvorrichtung so besonders einfach in andere Systeme, wie beispielsweise eine Klimaanlage, integrierbar ist. Im Schadensfall ist eine solche Beduftungsvorrichtung auch leicht austauschbar.

Die Aufgabe der Anordnung wird gelöst durch eine Anordnung mit den Merkmalen des Anspruchs 8. Ein Ausführungsbeispiel betrifft dabei eine Anordnung einer Beduftungsvorrichtung oder mehrerer Beduftungsvorrichtungen nach einem der vorhergehenden Ansprüche in einer Klimaanlage, wobei durch das Betätigen des Aktuators zumindest eine Klappe verdrehbar ist, wodurch zumindest eine Öffnung einer Duftmittelkartusche freigegeben wird, wodurch ein Duftmittel in einen Luftstrom der Klimaanlage freisetzbar ist.

Die Anordnung der Beduftungsvorrichtung in einer Klimaanlage und insbesondere in einem ihrer Luftkanäle ist besonders vorteilhaft, da das Duftmittel hierdurch einfach an die durch die Klimaanlage strömende Luft abgegeben werden kann.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von einem Ausführungsbeispiel unter Bezugnahme auf eine Zeichnung detailliert erläutert. In der Zeichnung zeigt:

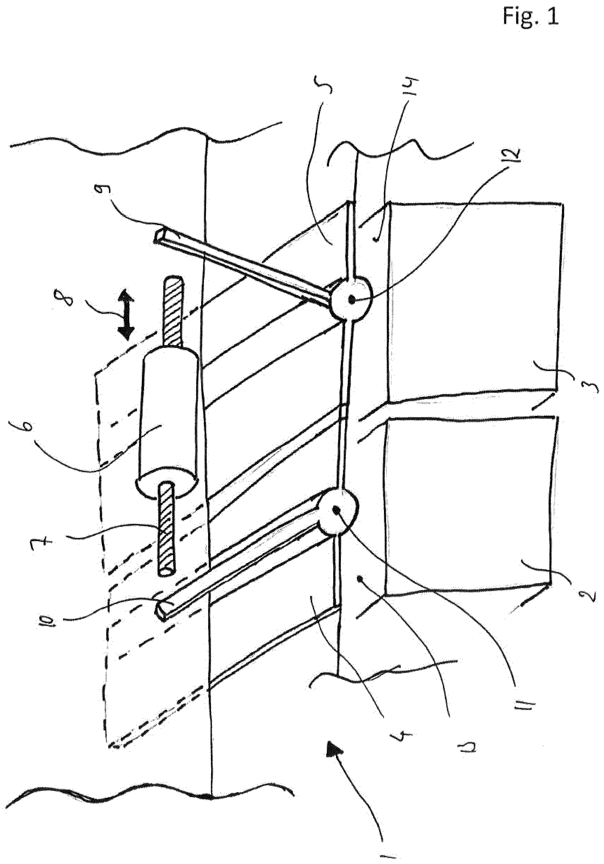

- Fig.1: eine schematische Ansicht einer Beduftungsvorrichtung mit einem mittig zwischen zwei Hebeln positionierten Aktuator, wobei die Hebel jeweils mit einer Klappe verbunden sind und über ein Stellglied des Aktuator, welches in entgegengesetzte Richtungen verschiebbar ist, bewegbar sind.

### Bevorzugte Ausführung der Erfindung

Die Figur 1 zeigt eine schematische Ansicht einer Beduftungsvorrichtung 1. Die Beduftungsvorrichtung 1 weist eine Duftmittelkartusche 2, eine darüber liegende Klappe 4 sowie eine neben der Duftmittelkartusche 2 angeordnete Duftmittelkartusche 3 und eine über dieser Duftmittelkartusche liegende Klappe 5 auf.

Die Klappe 4 und Klappe 5 sind jeweils um eine Drehachse 11, 12 drehbar gelagert. Die Drehachse 11 bezeichnet die Drehachse der Klappe 4, die Drehachse 12 bezeichnet die Drehachse der Klappe 5.

Die Duftmittelkartusche 2 weist an ihrer Oberseite eine Öffnung 13 auf. Die Duftmittelkartusche 3 weist an ihrer Oberseite eine Öffnung 14 auf. Die Öffnungen 13, 14 sind jeweils durch die darüber angeordneten Klappen 4, 5 fluiddicht verschlossen.

Durch die Klappen 4, 5 wird das in den Duftmittelkartuschen 2, 3 befindliche Duftmittel am ungewollten Ausströmen aus den Duftmittelkartuschen 2, 3 gehindert. Über ein gezieltes Verdrehen der Klappe 4 oder der Klappe 5 können die Öffnungen 13, 14 der Duftmittelkartuschen 2, 3 freigegeben werden, so dass eine bestimmte Menge des Duftmittels aus einer oder beiden Duftmittelkartuschen 2, 3 austritt.

Die Klappe 4 weist an einem ihrer Endbereiche, insbesondere im Bereich durch den die Drehachse 11 verläuft, einen Hebel 10 auf. Dieser steht in einem Winkel ungleich 90° zur Oberseite der Klappe 4. Analog weist die Klappe 5 einen zweiten Hebel 9 auf, welcher an einem seitlichen Endbereich der Klappe 5, im Bereich der Drehachse 12 angeordnet ist. Der Hebel 9 steht in einem Winkel ungleich 90° zur Oberseite der Klappe 5. Über die Hebel 9, 10 ist eine Verdrehung der jeweiligen Klappe 4, 5 zu bewerkstelligen.

In alternativen Ausführungen, können die Hebel auch in einem anderen Winkel zur jeweiligen Klappe ausgerichtet sein. Vorteilhaft ist dabei eine Anordnung in der Nähe der Drehachse der jeweiligen Klappe um die Klappe möglichst leicht verdrehen zu können.

Oberhalb der Klappen 4, 5 zwischen den Hebeln 9, 10 ist ein Aktuator 6 angeordnet. Dieser Aktuator 6 weist ein Stellglied 7 auf, welches entlang der Verschieberichtung 8 in einer translatorischen Bewegung durch den Aktuator 6 verschoben werden kann.

Bei einer genügend großen Verschiebung des Stellgliedes 7, entweder zum Hebel 9 hin oder zum Hebel 10 hin, kann die Klappe 5 bzw. die Klappe 4 um ihre jeweilige Drehachse 11, 12 verdreht werden. Der Aktuator 6 ist dabei derart angeordnet, dass das Stellglied 7 in eine Flucht mit den beiden Hebeln 9, 10 liegt, so dass durch ein Verschieben des Stellgliedes 7 entlang der Verschieberichtung 8 das Stellglied 7 mit entweder dem Hebel 9 oder dem Hebel 10 in Kontakt gerät.

In einer alternativen Ausführung der Hebel kann es vorgesehen sein, dass die Hebel Aufnahmen aufweisen, in welche das Stellglied eingreifen kann um einen sichereren Kontakt zwischen dem Hebel und dem Stellglied zu erzeugen.

In dem in Figur 1 gezeigten Ausführungsbeispiel ist das Stellglied 7 nicht dauerhaft mit den Hebeln 9, 10 in Kontakt. Nur durch ein Verschieben des Stellgliedes 7 entlang der Verschieberichtung 8 tritt das Stellglied 7 mit den Hebeln 9, 10 in Kontakt. Dies ist insbesondere vorteilhaft, damit jeder der Hebel 9, 10 unabhängig von dem jeweils anderen Hebel 9, 10 angesteuert werden kann.

In alternativen Ausführungen ist auch eine Kopplung der Bewegung der beiden Klappen vorsehbar.

Der Aktuator 6 kann vorteilhafterweise ein Piezo-Aktuator sein, welcher unter Ausnutzung eines piezoelektrischen Effekts das Stellglied 7 bewegen kann. In alternativen Ausführungen kann der Aktuator 6 beispielsweise auch durch einen elektrischen Hubmagneten gebildet sein, welcher ein Stellglied 7 durch elektromagnetische Kräfte entlang der Verschieberichtung 8 bewegt. Auch andere Aktuatoren, welche eine translatorische Bewegung entlang der Verschieberichtung 8 ermöglichen, sind in alternativen Ausführungsformen vorsehbar.

Die beiden Klappen 4, 5 sind jeweils durch ein Kraftspeicherelement, welches in der Figur 1 nicht dargestellt ist, in einer Grundstellung fixiert. In der Grundstellung sind die Öffnungen 13, 14 der Duftmittelkartuschen 2, 3 jeweils durch die Klappen 4, 5 verschlossen. Erst durch das Betätigen des jeweiligen Hebels 9, 10 kann die Klappe 4, 5 geöffnet werden.

Ein geeignetes Kraftspeicherelement ist hierbei beispielsweise ein Federelement. Der somit über das Kraftspeicherelement definierte Grundzustand, in welchem die Duftmittelkartuschen 2, 3 verschlossen sind, ist besonders vorteilhaft, da die Kartuschen 2, 3 so grundsätzlich geschlossen sind, so lange der Aktuator 6 nicht auf die Hebel 9, 10 der Klappen 4, 5 einwirkt. Somit wird ein ungewolltes Freisetzen des Duftmittels verhindert.

Da das Stellglied 7 des Aktuators 6 nicht fest mit dem Hebel 9, 10 verbunden ist, kann erreicht werden, dass unter Zuhilfenahme der Kraftspeicherelemente beide Klappen 4, 5 in ihrer Grundstellung jeweils geschlossen sind. Durch eine Ansteuerung des Aktuators 6, welcher das Stellglied 7 entweder nach links oder nach rechts entlang der Verschieberichtung 8 verschiebt, kann die eine oder die andere Klappe angesteuert werden. Ein Öffnen einer Klappe 4, 5 führt nicht zwangsläufig zu einer Veränderung der Stellung der jeweils anderen Klappe 4, 5.

In alternativen Ausführungsformen können sowohl die Duftmittelkartuschen als auch die Klappen sowie deren Hebel eine abweichende Ausformung sowie Anordnung aufweisen. Die Darstellung der Figur 1 ist hier lediglich beispielhaft und besitzt keinen beschränkenden Charakter. Ebenso kann die Positionierung des Aktuators von der in Figur 1 gezeigten Position abweichen. Die Figur 1 dient hier lediglich der Verdeutlichung des Erfindungsgedankens.

## Patentansprüche

1. Beduftungsvorrichtung (1) mit einer ersten Klappe (4, 5), einer zweiten Klappe (4, 5), einem Aktuator (6), einer ersten Duftmittelkartusche (2, 3) und einer zweiten Duftmittelkartusche (2, 3), wobei die erste Duftmittelkartusche (2, 3) eine erste Öffnung (13, 14) aufweist, die durch die erste Klappe (4, 5) in zu mindest einer Stellung der ersten Klappe (4, 5) verschließbar ist, wobei die zweite Duftmittelkartusche (2, 3) eine zweite Öffnung (13, 14) aufweist, die durch die zweite Klappe (4, 5) in zumindest einer Stellung der zweiten Klappe (4, 5) verschließbar ist, wobei die erste Klappe (4, 5) und die zweite Klappe (4, 5) durch den Aktuator (6) betätigbar sind, wobei der Aktuator (6) ein Stellglied (7) aufweist, welches durch den Aktuator (6) translatorisch verschiebbar ist, **dadurch gekennzeichnet, dass** der Aktuator (6) derart, relativ zu der ersten Klappe (4, 5) und der zweiten Klappe (4, 5), positioniert ist, dass durch ein Verschieben des Stellgliedes (7) in eine erste Richtung die erste Klappe (4, 5) betätigt wird und durch ein Verschieben des Stellgliedes (7) in eine zweite Richtung die zweite Klappe (4, 5) betätigt wird.

2. Beduftungsvorrichtung (1) nach Anspruch 1, **dadurch gekennzeichnet, dass** der Aktuator (6) durch ein Piezoaktuator, eine Formgedächtnis-Metalllegierung oder einen elektrischen Hubmagneten gebildet ist.

3. Beduftungsvorrichtung (1) nach einem der vorhergehenden Ansprüche, **dadurch gekenntzeichnet, dass** die erste Klappe (4, 5) und/oder die zweite Klappe (4, 5) um eine Drehachse (11, 12) drehbar gelagert sind.

4. Beduftungsvorrichtung (1) nach einem der vorhergehenden Ansprüche, **dadurch gekennzeichnet, dass** die erste Klappe (4, 5) und die zweite Klappe (4, 5) uber ein Getriebe entweder einzeln oder gemeinsam von dem Aktuator (6) betätigbar sind.

5. Beduftungsvorrichtung (1) nach einem der vorhergehenden Ansprüche, **dadurch gekennzeichnet, dass** die erste Klappe (4, 5) und/oder die zweite Klappe (4, 5) durch jeweils ein Kraftspeicherelement oder durch ein gemeinsames Kraftspeicherelement in einer ersten Stellung gehalten werden, in welcher sie die jeweilige Öffnung (13, 14) der Duftmittelkartusche (2, 3) verschießen.

6. Beduftungsvorrichtung (1) nach Anspruch 5, **dadurch gekennzeichnet, dass** die erste Klappe (4, 5) und/oder die zweite Klappe (4, 5) durch den Aktuator (6) in eine von der ersten Stellung verschiedene Stellung bewegbar ist, in welcher die jeweilige Öffnung (13, 14) der jeweiligen Duftmittelkartusche (2, 3) freigegeben wird.

7. Beduftungsvorrichtung (1) nach einem der vorhergehenden Ansprüche, **dadurch gekennzeichnet, dass** die erste Duftmittelkartusche (2, 3), die zweite Duftmittelkartusche (2, 3), die erste Klappe (4, 5), die zweite Klappe (4, 5), der Aktuator (6) und ein eventuell vorhandenes Getriebe in einer einteiligen Baueinheit zusammengefasst sind.

8. Anordnung einer Beduftungsvorrichtung (1) oder mehrerer Beduftungsvorrichtungen (1) nach einem der vorhergehenden Ansprüche in einer Klimaanlage, **dadurch gekennzeichnet, dass** durch das Betätigen des Aktuators (6) zumindest eine Klappe (4, 5) verdrehbar ist, wodurch zumindest eine Öffnung (13, 14) einer Duftmittelkartusche (2, 3) freigegeben wird, wodurch ein Duftmittel in einen Luftstrom der Klimaanlage freisetzbar ist.

## Claims

1. A fragrancing device (1) with a first flap (4, 5), a second flap (4, 5), an actuator (6), a first fragrance cartridge (2, 3) and a second fragrance cartridge (2, 3), wherein the first fragrance cartridge (2, 3) has a first opening (13, 14) which can be closed by the first flap (4, 5) in at least one position of the first flap (4, 5), wherein the second fragrance cartridge (2, 3) has a second opening (13, 14) which can be closed by the second flap (4, 5) in at least one position of the second flap (4, 5), wherein the first flap (4, 5) and the second flap (4, 5) can be actuated by the actuator (6), wherein the actuator (6) has an actuating element (7) which is translationally displaceable by the actuator (6), **characterised in that** the actuator (6) is, relative to the first flap (4, 5) and the second flap (4, 5) positioned in such a way that the first flap (4, 5) is actuated by displacing the actuating element (7) in a first direction and the second flap (4, 5) is actuated by displacing the actuating element (7) in a second direction.

2. The fragrancing device (1) according to claim 1, **characterised in that** the actuator (6) is formed by a piezo actuator, a shape memory metal alloy or an electric lifting magnet.

3. The fragrancing device (1) according to one of the preceding claims, **characterised in that** the first flap (4, 5) and/or the second flap (4, 5) are rotatably mounted about a rotation axis (11, 12).

4. The fragrancing device (1) according to one of the preceding claims, **characterised in that** the first flap (4, 5) and the second flap (4, 5) can be actuated by the actuator (6) either individually or jointly via a gear.

5. The fragrancing device (1) according to one of the preceding claims, **characterised in that** the first flap (4, 5) and/or the second flap (4, 5) are held in a first position by a respective force storage element or by a common force storage element, in which position they close the respective opening (13, 14) of the fragrance cartridge (2, 3).

6. The fragrancing device (1) according to claim 5, **characterised in that** the first flap (4, 5) and/or the second flap (4, 5) can be moved into a position different from the first position by the actuator (6), in which position the respective opening (13, 14) of the respective fragrance cartridge (2, 3) is uncovered.

7. The fragrancing device (1) according to one of the preceding claims, **characterised in that** the first fragrance cartridge (2, 3), the second fragrance cartridge (2, 3), the first flap (4, 5), the second flap (4, 5), the actuator (6) and a possibly existing gear are combined in a one-piece structural unit.

8. An arrangement of a fragrancing device (1) or several fragrancing devices (1) according to one of the preceding claims in an air-conditioning system, **characterised in that** by actuating the actuator (6), at least one flap (4, 5) is rotatable, whereby at least one opening (13, 14) of a fragrance cartridge (2, 3) is released, whereby a fragrance can be released into an air stream of the air-conditioning system.

## Revendications

1. Dispositif servant à parfumer (1) comprenant un premier volet (4, 5), un second volet (4, 5), un actionneur (6), une première cartouche d'agent parfumant (2, 3) et une seconde cartouche d'agent parfumant (2, 3), où la première cartouche d'agent parfumant (2, 3) présente une première ouverture (13, 14) qui, dans au moins une position du premier volet (4, 5), peut être fermée par le premier volet (4, 5), où la seconde cartouche d'agent parfumant (2, 3) présente une seconde ouverture (13, 14) qui, dans au moins une position du second volet (4, 5), peut être fermée par le second volet (4, 5), où le premier volet (4, 5) et le second volet (4, 5) peuvent être commandés par l'actionneur (6), où l'actionneur (6) présente un élément de réglage (7) qui peut être déplacé en translation par l'actionneur (6), **caractérisé en ce que** l'actionneur (6) est positionné par rapport au premier volet (4, 5) et au second volet (4, 5), de manière telle que, sous l'effet d'un déplacement de l'élément de réglage (7) dans une première direction, le premier volet (4, 5) soit actionné et que, sous l'effet d'un déplacement de l'élément de réglage (7) dans une seconde direction, le second volet (4, 5) soit actionné.

2. Dispositif servant à parfumer (1) selon la revendication 1, **caractérisé en ce que** l'actionneur (6) est formé par un actionneur piézoélectrique, par un alliage de métaux à mémoire de forme ou par un électroaimant de levage.

3. Dispositif servant à parfumer (1) selon l'une des revendications précédentes, **caractérisé en ce que** le premier volet (4, 5) et / ou le second volet (4, 5) sont montés de manière à pouvoir tourner autour d'un axe de rotation (11, 12).

4. Dispositif servant à parfumer (1) selon l'une quelconque des revendications précédentes, **caractérisé en ce que** le premier volet (4, 5) et le second volet (4, 5) peuvent être commandés par l'actionneur (6) grâce à un mécanisme, soit séparément, soit ensemble.

5. Dispositif servant à parfumer (1) selon l'une quelconque des revendications précédentes, **caractérisé en ce que** le premier volet (4, 5) et / ou le second volet (4, 5) sont maintenus dans une première position grâce, respectivement, à un élément à accumulation d'énergie, ou bien grâce à un élément commun à accumulation d'énergie, première position dans laquelle lesdits volets ferment l'ouverture respective (13, 14) de la cartouche d'agent parfumant (2, 3).

6. Dispositif servant à parfumer (1) selon la revendication 5, **caractérisé en ce que** le premier volet (4, 5) et / ou le second volet (4, 5) peuvent être déplacés par l'actionneur (6), dans une position différente de la première position, position différente dans laquelle l'ouverture respective (13, 14) de la cartouche respective (2, 3) d'agent parfumant est dégagée.

7. Dispositif servant à parfumer (1) selon l'une quelconque des revendications précédentes, **caractérisé en ce que** la première cartouche d'agent parfumant (2, 3), la seconde cartouche d'agent parfumant (2, 3), le premier volet (4, 5), le second volet (4, 5), l'actionneur (6) et un mécanisme éventuellement présent sont regroupés dans un ensemble unitaire formant une seule et même pièce.

8. Agencement, dans un système de climatisation, d'un dispositif servant à parfumer (1) ou de plusieurs dispositifs servant à parfumer (1) selon l'une quelconque des revendications précédentes, **caractérisé en ce qu'**au moins un volet (4, 5) peut être tourné en manoeuvrant l'actionneur (6), grâce à quoi au moins une ouverture (13, 14) d'une cartouche d'agent parfumant (2, 3) est dégagée, grâce à quoi un agent parfumant peut être libéré dans un flux d'air du système de climatisation.
